# EUROPEAN PATENT SPECIFICATION

(11) **EP 1 783 696 B1**
(45) Date of publication and mention of the grant of the patent: **14.05.2008**
(21) Application number: 04766889.2
(22) Date of filing: 27.07.2004
(51) Int. Cl.: G07C 13/00, H04L 9/30, H04L 9/32, G06Q 10/00

(54) **METHODS FOR THE MANAGEMENT AND PROTECTION OF ELECTORAL PROCESSES, WHICH ARE ASSOCIATED WITH AN ELECTRONIC VOTING TERMINAL, AND OPERATIVE MODULE USED**
VERFAHREN ZUM VERWALTEN UND SCHÜTZEN VON WÄHLPROZESSEN, DIE MIT EINEM ELEKTRONISCHEN WÄHL-ENDGERÄT ASSOZIIERT SIND, UND VERWENDETES OPERATIVES MODUL
PROCEDES DE GESTION ET DE PROTECTION DE PROCESSUS ELECTORAUX ASSOCIES A UNE BORNE DE VOTE ELECTRONIQUE ET MODULE D'EXPLOITATION UTILISE

(43) Date of publication of application: 09.05.2007
(73) Proprietor: SCYTL Secure Electronic Voting, S.A., 08015 Barcelona (ES)
(72) Inventor: RIERA JORBA, Andreu, E-08251 Santpedor (ES); PUIGGALÍ ALLEPUZ, Jordi, E-08190 Sant Cugat del Vallès (ES)
(74) Representative: Gislon, Gabriele
(86) International application number: PCT/ES2004/000350
(87) International publication number: WO 2006/021594

(56) References cited:
- WO-A2-03/088001
- US-A1- 2002 128 978
- US-A1- 2003 178 484
- PATENT ABSTRACTS OF JAPAN vol. 2003, no. 12 31 October 2003 & JP 2003 308550 A (VICTOR COMPANY OF JAPAN)

## Description

### Field of the Invention

The present invention relates to a method for the management and protection of electoral processes which is implemented in association with an electronic voting terminal, i.e. starting from the digital data coming from said voting terminal. Said method comprises an interface for presenting the voting options to be selected as well as interactive means for carrying out said selection. After selecting the vote, the latter can be sent to a remote site where it is processed.

The invention also relates to a verification operative module connected to a computerized voting terminal which allows carrying out the operations of the proposed method.

### Background of the Invention

In an electronic voting method, a voter or a plurality of them cast their votes from a voting terminal. In said terminal the voters carry out all or part of the processes for selecting the voting options, verifying that said selected options are the desired ones, casting the vote (after confirmation) and, depending on the type of voting terminal, storing the votes and subsequently counting them. Both the security of these terminals and the correct operation thereof are critical for the development of an electoral process, therefore it is essential for said terminals to incorporate security and audit measures facilitating the verification of their correct operation.

Electronic voting machines were introduced in the United States in the 70s (US-B1-3,934,793) as a similar but more sophisticated version of the voting terminals based on the use of levers (voting lever machines). In this electronic voting machines, the voter selects his/her voting options and depending on the equipment used by the voting machine, he/she casts his/her vote or opinion by means of pressing a button or pressing a touch screen. As occurs in traditional elections, the voters go to the voting place corresponding to their electoral district and prove that they are authorized to cast their vote in said place, generally by mean of presenting a document proving their identity. After this process, the voter casts his/her vote in the voting terminal.

It will be observed that this type of electronic voting systems must incorporate a series of security measures. Voting by means of using physical ballots in conveniently sealed transparent ballot boxes is carried out with confidence due to the use of physical security measures which allow visually corroborating that the envelope containing the vote has been effectively and anonymously collected together with the rest of the votes, therefore it will form part of the subsequent counting process. Nevertheless, this type of physical protection means is not useful in systems using electronic voting terminals.

Most of the electronic voting terminals existing on the market are complex devices, a combination of hardware and software architecture, and are usually protected by intellectual property rights or include components (e.g. software) which are subject to these rights. All this causes a great opacity with respect to how the electoral process is carried out by the voting terminals and therefore, it increases the concerns on the possibility of a manipulation of the votes cast on the voting terminal. Furthermore, the audit processes intended to verify the compliance of the necessary requirements to ensure the security of an election and detect possible fraudulent practices are expensive and not transparent. In fact, this audit process is usually carried out by independent laboratories which must agree on very strict confidentiality contracts. These are the main reasons for which there are still a large number of sceptics with respect to the use of said electronic voting methods.

The so-called DRE (Direct Recording Electronic) is one of electronic voting terminals which have recently caused more controversy. In fact, in July 2003, researchers of the John Hopkins and Rice universities published a report (Khono T., Stubblefield A. and Rubin A. Analysis of an Electronic Voting System. Johns Hopkins Information Security Institute Technical Report TR-2003-19) which casts a doubt on the security of one of the major manufacturers of DRE, Diebold. In spite of the answers made by experts of the company, there are still some aspects to be clarified which do not allow assuring the complete security of their terminals.

It must be taken into account that the more complex the voting terminal to be audited is, the time and economic cost increases to limits that are sometimes non viable. Considering that these terminals could be changed and/or updated (software reviews, substitution of failed components etc.) during their life cycle, the problem increases since each change involves a new review of each and every one of the terminals which have been subjected to the change.

For the main purpose of reducing the lack of confidence in current voting terminals, security measures allowing the voter to verify if the vote registered electronically corresponds to his/her voting intention have been proposed recently. The measures proposed to date can be summarized in those based on printing the votes to allow a manual counting, and those based on cryptographic schemes or protocols to provide the voter with certain cryptographic information linked to the vote which will allow the voter to later verify if his/her vote has been registered correctly.

The measures based on the printing of paper votes (Mercury, R. *Facts About Voter Verified Paper Ballots*) allow the voter to verify his/her vote before it is cast and, if required, these paper votes can be used later to audit the fairness of the process. This audit process is commonly called voting terminal results verification. Said verification ensures the accuracy of the electoral process to a great extent, however it has the drawback that it is quite expensive since requires a lot of time for the manual review of the votes. Furthermore this process is high vulnerable to failures of the used mechanical components (such as printers) and human errors or fraud. For the purpose of speeding up the counting process, several voting terminals, such as Accupoll Inc. terminals which use special codes or inks at the time of printing the vote, have been proposed. These kind of terminals introduced improvements, however they still do not provide a completely reliable solution for fraud issues. They further add a new complexity factor to the audit because the correctness of the counting devices must also be verified.

US-A-2002 0 075 246 discloses a voting machine using ballots and digitalized vote selection.

Voting terminal cryptographic schemes or protocols for vote verification, such as those described in (EP-B1-1 224 767, WO-A3- 02/077754, WO-A2-03/071491, WO-A1-03/050771), ensure the fairness of the electoral process by means of generating an authentication proof or receipt allowing the voter to verify the accuracy of the whole process. Even so, the use of these protocols in voting terminals does not reduce the complexity of the audit, since the implementation of these protocols and the environment in which they are executed (which is normally the terminal itself) must be audited to verify that the protocols have been correctly implemented.

In 2001, Bruck and other investigators (Bruck S., Jefferson D. and Rivest R. A modular voting architecture ("Frogs"), WOTE minutes, August 2001) proposed a new approach for simplifying the voting terminal audit process based on the use of a modular architecture in voting systems. This proposal introduces the use of a specific terminal for displaying the vote stored in a memory device (e.g. a card). This vote, which has been previously generated in an independent manner from a voting terminal, is recorded in a memory device, and this memory device is deposited in a physical ballot box like a traditional paper vote. The main advantage of this system lies in the fact that the voting terminal does not need to be audited. On the other hand, it has the drawback that it cannot be used for the casting of remote votes; nor it does allow the verification of the results of an election without having to store all the used memory devices with cast votes. Therefore the counting involves reading each and every one of the memory devices. Furthermore, the mentioned approach does not provide supplementary measures, such as voting receipts, to facilitate the voter verification of the election results.

Therefore, there is an evident need to introduce a new method providing effective verification means to the voters while facilitating a voting terminal audit process at the same time.

### Brief Description of the Invention

The present invention describes a method for the management and protection of electoral processes which are carried out by electronic voting terminals. The invention also relates to the specifications of an operative module which, associated with a voting terminal, allows implementing said method.

To that end, a first objective of the present invention is to define a method for implementing a secure environment which can be easily audited and is associated with a voting terminal, and which allows ensuring the correct operation of an election independently of the security of the voting terminal to which it is associated.

It is another objective of the present invention the protection of the privacy and integrity of the electronic votes once they have been cast from said environment. In this way, said votes can be securely processed by third parties.

For the purpose of offering voters the possibility of verifying that their votes have been correctly and electronically registered, the present invention also introduces a verification step with these properties.

Another objective of the invention is to provide an audit mechanism for auditing the results of a simple election, based on digital measures.

Finally, but not less importantly, an objective of the present invention is to allow the implementation both in person and remote electronic voting environments.

The proposed method according to the invention is defined by the steps of claim 1.

The method can further comprise an additional step of sending to the associated voting terminal digital data containing at least the result of said confirmation and more specifically containing digital information relating to said one or more selected voting option/options.

The proposed method allows carrying out an audit of the electoral process started in said voting terminal, by means of auditing the mentioned verification module.

In its basic version, the operative or verification module used for implementing the proposed method is defined by the features of claim 30.

In a preferred embodiment, said verification module further comprises an output unit for sending digital data resulting from the verification process.

Other features of the invention and, more specifically, specific features of the steps of the method and the elements forming the verification module will be described with more detail below, including some drawings.

### Brief Description of the Drawings

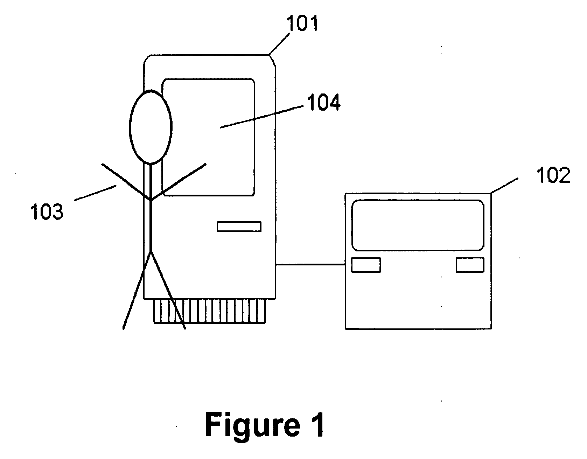

Figure 1 shows the main implementation elements on which the electronic voting method described in the present invention: a voting terminal (101) through which the voter (103) selects the voting options and a verification module (102) allowing the voter (103) to verify the voting options which he/she has selected in the voting terminal (101).

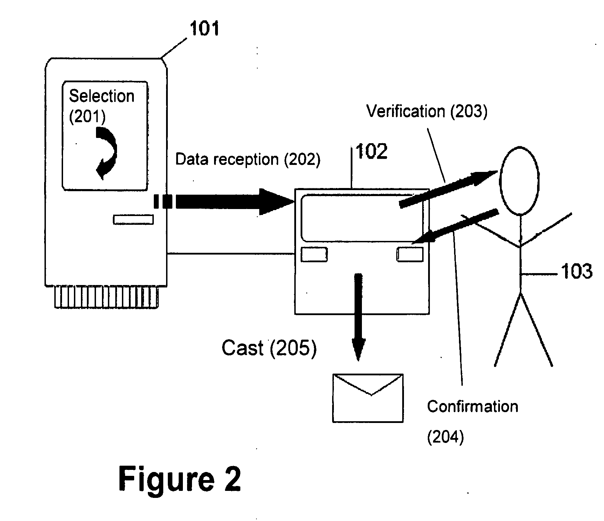

Figure 2 shows the main steps characterizing the proposed voting method. After carrying out the selection (201) of the voting option/options in the voting terminal (101), the verification module (102) receives (202) digital data relating to said selected voting option/options. Then, the voter (103) verifies (203) the selected voting option/options and confirms, if he/she agrees with these options, the selection of his/her vote by a suitable confirmation means (at least a pair of buttons of the verification module in Figure 2). Finally, after confirming that the vote has been digitally recorded, the vote is cast (205).

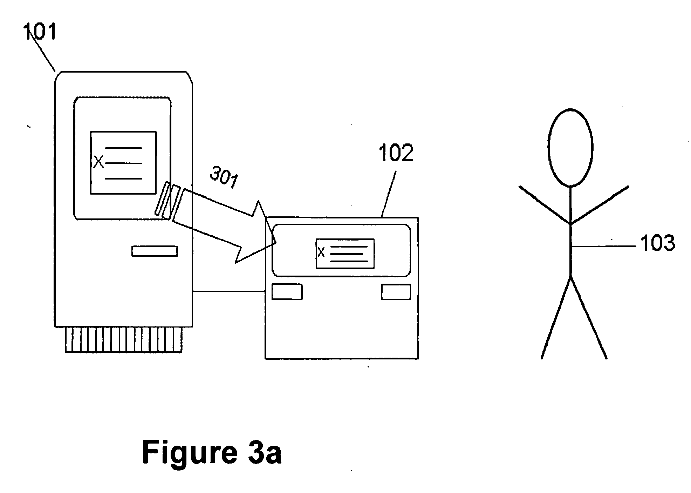

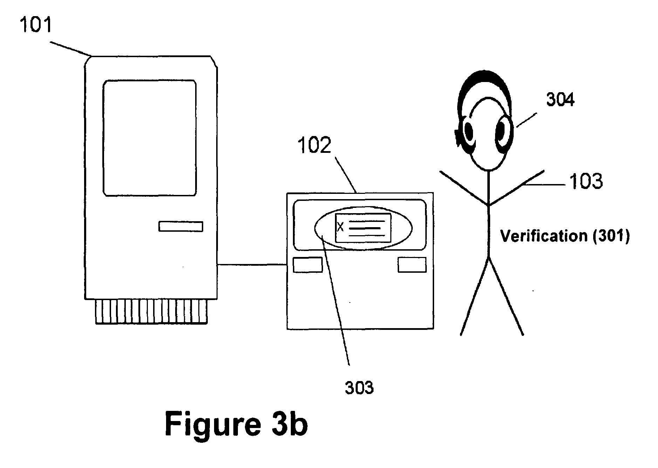

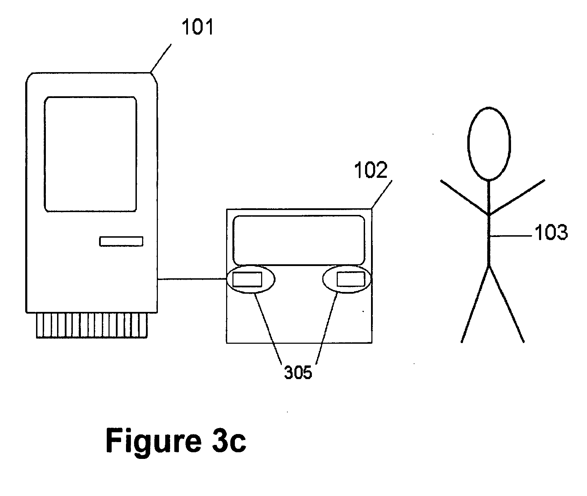

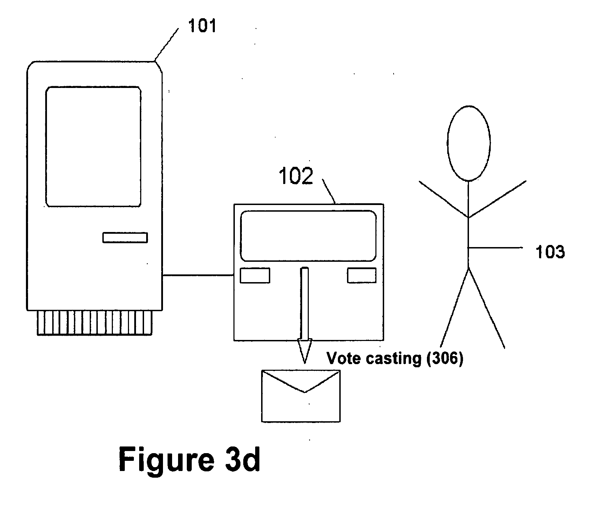

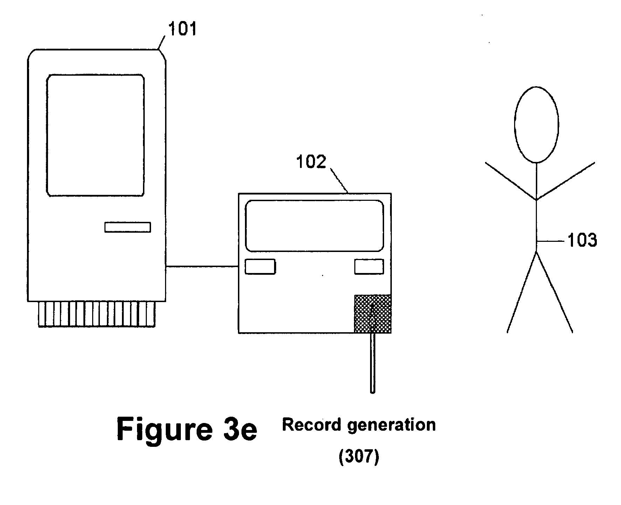

Figures 3a, 3b, 3c, 3d and 3e describe each one of the previous steps with more detail. In Figure 3a, the digital data containing the selection (301) of the voting option/options is received in the verification module (102), in which the verification process (302) takes place. The verification (302) of each of the previously selected voting option/options will be carried out through a suitable interface, which in Figure 3b is a visual interface (303) or an audible interface (304). In Figure 3c the vote selection (201) is confirmed (204) (in the event that the verification process has been carried out satisfactorily), by means of a pair of buttons (305) forming part of the verification module (102). The vote casting (306) is described in Figure 3d, whereas finally, Figure 3e shows the generation of a digital record (307) which protects the integrity of said digital data.

### Detailed Description of the Invention

The present invention relates to a method for the management and protection of electoral processes using electronic voting terminals 101 as a platform for capturing the voting preferences of the voters 103 and casting the votes. The use of a verification module 102 associated with an electronic voting terminal 101, with a well-known structure and functionality, is proposed to put said invention into practice. In addition to providing substantial improvements in the security of the electoral process, said module 102 also facilitates and even simplifies the audit of said electoral processes.

According to the present invention, the verification module 102 comprises the next elements. An input unit that allows receiving data, in digital format, related to the voting options selected in the voting terminal 101 associated with this module. An interface 303 and 304 (Figure 3b) allowing the voter 103 to verify the voting options relating the data received by the input unit. Confirmation means 305 which will allow the voter to confirm if the options presented in the interface are the desired ones. And finally, if the voter has confirmed the options, a processing unit executing the processes of generating a digital record 307 (Fig. 3e) that protects the integrity of the data which has been received by the input unit.

In a preferred embodiment, verification module 102 also incorporates an output unit for sending outside the module certain digital data obtained as the result of the verification process 302 carried out therein. In order to facilitate the interconnectivity of the verification module 102 with the voting terminal 101, said input unit and said output unit can be the same unit. Therefore, the same communication channel could be used for sending and receiving data, such as a single data communication cable.

A storage unit (such as a write-once device) can be also associated with the verification module 102 to store the data needed for the generation of the mentioned digital record 307. Due to the fact that the stored data can be necessary during the election, this storage unit can be persistent to prevent the loss of data due to a power failure.

To facilitate the integration with a voting terminal 101, this device can have an autonomous power supply source. In this way, it can obtain the energy for its operation from its own power supply. It could be possible to consider that said energy is obtained from the voting terminal 102 to which it is associated.

The method for the management and protection of electoral processes of the present invention is implemented, as explained previously, in association with a voting terminal 101. The voting terminal 101 essentially must has at least one interface 104 for presenting the voting options to be selected, and means with which a voter 103 interacts for selecting one or more voting options and therefore carry out said selection 201. After said step, the selected voting options are provided to a local or remote processing site for their counting.

The mentioned method is essentially characterised in that after the voting option selection step 201, it comprises carrying out the following steps by means of the verification module 102 associated with said voting terminal 101:
- reception 202 of digital data related to the voting options selected by a voter 103 at the voting terminal 101;
- verification 203 of the voting options selected by the voter 103 which are in some way encoded within the digital data received during the preceding step. The method contemplates the implementation of an interface 303 and 304 for facilitating to the voter 103 the verification 302 of said selected voting options;
- confirmation 204 by the voter 103 of the voting options presented during the previous verification step. For this confirmation, the method provides the voter 103 with a confirmation means 305; and
- finally, in the event that the voter 103 has accepted the voting options in the previous confirmation step, the generation of a digital record 307 which protects the integrity of the digital data which has been received in the reception step.

The method takes into account that the received data 301 comprises at least the options selected by the voter 103 at the voting terminal 101, allowing the inclusion of other additional data which could be useful for auditing, such as specific information of the election.

To facilitate the accessibility of disabled voters 103, the verification process 302 supports different interfaces for presenting the received voting options 301. For this purpose, said interface can be a visual 303, audio 304 or touch interface (not graphically shown but which can be implemented by means of a Braille device).

With reference to the previously described verification module 102, different embodiments can be implemented according to said interfaces, such as video screen (such as an LCD screen) or a printer if it is a visual interface. If it is an auditory interface, of the embodiment implements an audio device, such as earphones. Another additional embodiment implement an interface based on a touch device, such as Braille character generating device.

For the confirmation step, the method described in the present invention supports confirmation means that allow the voter 103 to choose between at least two options, such as the acceptance or rejection of the options presented in the verification step 203. Although the voter had two or more different options to confirm it is not required to have one interface component for each option (for example, a different button per option). Therefore, there can be a default option which is automatically executed in the event that certain conditions are complied with, such as after an established inactivity time. To facilitate the accessibility of the voters, the options can be implemented by: two buttons of said interface (which can be substituted by a single button when using a certain pushing sequence) or, in an alternative embodiment based on an audio interface, they could be a minimum of two audible commands (which can be introduced through a microphone for example).

These interfaces are implemented in the verification module 102 by means of a touch device, such as a button or by using a screen, or an audio device such as microphone, which will allow colleting voice commands for their interpretation.

According to a preferred embodiment, the method comprises an additional step (known as sending step) for sending to said voting terminal 101 some digital data containing at least the result of said voter confirmation made in said verification module 102. Said confirmation digital data can additionally contain digital information relating to the selected voting options. Therefore, the confirmed voting options can be stored in the voting terminal 101 itself or even in another machine, allowing the use of this method in remote electronic voting environments, where the votes are stored remotely.

In a preferred embodiment of this method, an audit of the whole electoral process associated with said voting terminal 101 is implemented through a single audit of said verification module 102. The data stored in the digital record 307 can supports different security and audit levels, depending on the requirements of the election.

For verifying the integrity of the results obtained from the voting options selected in the voting terminal 101, the method can use the digital record 307 generated by the verification module 102. In a preferred embodiment, said digital record 307 is stored in said verification module 102, allowing its access when auditing said module. Said digital record is a key part for the security of the electoral process. Different approaches for implementing the digital record method are considered in this invention, each of them complying with different security requirements.

In a first approach, this method considers a set of implementations which do not incorporate security cryptographic means. However they do detect possible manipulations of the cast votes. To that end, said digital record 307 can comprise a copy of said received and confirmed digital data, a process which would be equivalent to having an independent copy of the voting options selected at a voting terminal 101 but confirmed in their associated verification module 102. As an additional measure, this digital record with a copy of the voting options can be complemented with a counter registering the number of confirmations carried out for each of the different voting options. As a simplified alternative, the digital record can only comprise the counter with the number of confirmations carried out for each of the different possible voting options, without the copy of the selected voting options.

In a second approach, and according to a preferred embodiment of the method proposed in the present invention, the step of generating a digital record 307 comprises carrying out a cryptographic operation on at least part of said received digital data from the voting terminal 101. This measure allows improving the implementation of the measures of the first group and even increasing the security of the electoral process in some implementations.

A first proposal of cryptographic operation for generating a digital record consists on executing a hash function, such as an accumulation summary function (OWA), of the contents of all the accumulated digital data received until that time from the voting terminal 101 that have been confirmed by the voters. This measure allows verifying the integrity of the cast votes without needing to keep a copy of all of them, therefore the space requirements are lower since do not depend on the number of cast votes. This proposal can be complemented by adding to the digital record the number of confirmations of each of the different voting options.

A second proposal is based on the use of asymmetric keys for the protection of the confirmed voting options. This proposal is mainly designed to protect the voting options when sent outside the verification module 102. As a first measure, the verification module 102 is provided with at least one asymmetric key to protect by means of digital signatures the integrity of the content of the digital record 307. Thus, in a preferred embodiment, the digital record 307 comprises at least one digital signature generated from the digital data 301 of the reception step using the private component of said at least one pair of asymmetric keys. An alternative method based on protecting the privacy of the digital record comprises an encryption (such as a digital envelope) of said digital data 301 of the reception step using said at least one public key of an authority. This measure only allows the authority on possessing of the private key to access the contents of the digital record. In addition, said digital record will have an associated digital signature for said encryption. This digital signature can be generated with the private component of said at least one pair of asymmetric keys of the verification module. In this way, both the privacy of the content and the integrity thereof are ensured. When the privacy of the content of the digital record (e.g. with digital envelopes) is protected by means of the encryption, the method considers an additional step for deciphering said digital data, by means of using at least one private key of an authority.

Finally, the method also provides measures for enabling the voter verification of the elections.

A first measure allows the voter 103 to verify himself/herself the accuracy of the voting process associated with the voting terminal 101 by means of implementing an additional step of issuing a voting receipt to the voter based on a single identifier. For this purpose, the operative module 102 can incorporate a unit for issuing a voting receipt to the voter 103.

In the even that the votes cast are printed (e.g. as a verification measure), the method can implement an additional step of incorporating to the printed vote cast a graphic representation of said digital signature of the content representing said digital data 301 of the reception step, with the purpose of adding an integrity proof to said printed votes.

This invention also provides means for facilitating an audit of the verification module 102. In this sense, the processing unit of the verification module 102 can be in a removable media with computation ability, such as a smart card. In order to increase the security of the module, said removable device can integrate cryptographic functionalities, such as the management and generation of asymmetric keys, the digital signature or the symmetric encryption. In this way, the cryptographic operations are implemented in an isolated environment protected against external attacks. Finally, the audit could be facilitated if said removable device integrates at least one storage unit, such as an internal memory, in which the digital record could be stored.

## Claims

1. A method for the management and protection of electoral processes associated with an electronic voting terminal (101), and said voting terminal comprising at least one interface for presenting the voting options to be selected, and means for carrying out said selection with which a voter (103) interacts to carry out a selection step for selecting one or more voting options, after which step one or more selected voting options is/are provided to a local or remote processing site, **characterised in that** after said selection step, it comprises carrying out the following steps by means of a verification module (102) associated with said voting terminal:
a) receiving digital data relating to said one or more selected voting option/options;
b) providing an interface so that the voter (103) can verify said one or more previously selected voting option/options;
c) providing confirmation means; and
d) in the event that said one or more voting options have been accepted by said voter (103), generating a digital registry to protect the integrity of said digital data by means of said conformation means
so that through a single audit of said verification module (102) an audit of the whole electoral process associated with said voting terminal can be obtained.

2. A method, according to claim 1, **characterised by** an additional sending step for sending informative digital data containing at least the result of said confirmation.

3. A method, according to claim 2, **characterised in that** said sending step is carried out towards said voting terminal.

4. A method, according to claim 2 or 3, **characterised in that** said informative data contain digital information relating to said one or more selected voting option/options.

5. A method, according to claim 1, **characterised in that** said digital data of step a) comprise at least said one or more options selected by the voter (103) at the voting terminal.

6. A method, according to claim 1, **characterised in that** said digital registry can be consulted to verify the integrity of the counting of the voting option/options selected at the voting terminal associated with said verification module.

7. A method according to claim 1, **characterised by** carrying out an additional step consisting of an audit of the electoral process associated with said voting terminal through an audit of said verification module.

8. A method according to claim 1, **characterised in that** said step b) comprises providing a visual interface.

9. A method according to claim 1, **characterised in that** said step b) comprises providing an auditory interface.

10. A method according to claim 1, **characterised in that** said step b) comprises providing a touch interface.

11. A method according to claim 1, **characterised in that** said step b) comprises providing an interface with at least two options.

12. A method according to claim 11, **characterised in that** said options are represented by at least two buttons of said interface.

13. A method according to claim 11, **characterised in that** said options respond to a minimum of two audible commands through said interface.

14. A method according to claim 1, **characterised in that** said step d) for generating a registry comprises generating a copy of said received and confirmed digital data.

15. A method according to claim 14, **characterised in that** said step d) for generating a registry further comprises using a counter for counting the number of confirmations carried out for each of the different possible voting options.

16. A method according to claim 1, **characterised in that** said step d) for generating a registry comprises using a counter for counting the number of confirmations carried out for each of the different possible voting options.

17. A method according to claim 1, **characterised in that** said step d) for generating a registry comprises carrying out a cryptographic operation on at least a part of each of said digital data received from the voting terminal and confirmed.

18. A method according to claim 17, **characterised in that** the result of said cryptographic operation consists of a summary dependent on the exact contents of each and every one of the received digital data which have been confirmed.

19. A method according to claim 18, **characterised in that** said cryptographic operation is an accumulation summary function (OWA).

20. A method according to claim 18, **characterised in that** said step d) for generating a registry comprises using a counter for counting the number of confirmations carried out for each of the different possible voting options.

21. A method according to claims 15, 16 or 20, **characterised in that** said registry is stored in said verification module.

22. A method according to claim 17, **characterised by** providing the verification module with at least one asymmetric key.

23. A method according to claim 22, **characterised in that** said digital registry comprises a digital signature based on data from said digital data of step a), using the private component of said asymmetric keys which are at least one in number.

24. A method according to claim 22, **characterised in that** said digital registry comprises an encryption based on said digital data of step a), using at least one public key of an authority.

25. A method according to claim 24, **characterised in that** said encryption consists of a digital envelope.

26. A method according to claim 24, **characterised in that** said digital registry has an associated digital signature generated with the private component of said asymmetric keys which are at least one in number.

27. A method according to claim 24, **characterised by** comprising an additional step for deciphering said encrypted digital data by at least one private key of an authority.

28. A method according to claim 24, **characterised by** comprising an additional step for delivering a voting receipt generated based on a single identifier to the voter (103).

29. A method according to claim 23 or 26, **characterised by** comprising an additional step incorporating a graphic representation of said digital signature to a printing of the content representing said digital data of step a).

30. A verification operative module (102) associated with an electronic voting terminal (101) said voting terminal comprising at least one interface for presenting the voting options to be selected and means for carrying out said selection, with which a voter (103) interacts to carry out a selection step for selecting one or more voting options, after which one or more selected voting options are provided to a local or remote processing site, **characterised by** comprising:
a) an input unit allowing the interaction with said voting terminal to receive digital data relating to the voting option/options selected at said voting terminal;
b) an interface for the voter (103) to verify said previously selected voting options;
c) confirmation means; and
d) a processing unit for generating a digital registry to protect the integrity of all the digital data received in section a) and which have been confirmed by means c)
so that through a single audit of said verification module (102) an audit of the whole electoral process associated with said voting terminal can be obtained.

31. An operative module according to claim 30, **characterised in that** it further comprises an output unit for sending digital data resulting from the verification process.

32. An operative module according to claim 31, **characterised in that** said digital data resulting from the verification process is sent to said voting terminal.

33. An operative module according to claim 31, **characterised in that** said input unit and said output unit are the same unit.

34. An operative module according to claim 30, **characterised in that** it further comprises a storage unit for storing necessary data for the generation of said digital registry described in section d).

35. An operative module according to claim 34, wherein said storage unit is a device for a single writing.

36. An operative module according to claim 30, **characterised in that** it further comprises a unit for delivering a voting receipt to the voter (103).

37. An operative module according to claim 30, wherein said verification interface is a video screen selected from the group comprising at least one LCD screen or one TFT screen.

38. An operative module according to claim 30, wherein said verification interface is an audio device selected from the group comprising at least earphones or loudspeakers.

39. An operative module according to claim 30, wherein said verification interface is a printer.

40. An operative module according to claim 30, wherein said verification interface is a touch device selected from the group comprising at least one character recognition device or a Braille display.

41. An operative module according to claim 30, wherein said confirmation means are a touch device selected from the group comprising at least one button or one screen.

42. An operative module according to claim 30, wherein said confirmation means are an audio device selected from the group comprising at least one sound replicator or detector or a microphone.

43. An operative module according to claim 30, wherein said processing unit is in a removable device with computation ability, selected from the group comprising at least one smart card or one FPGA.

44. An operative module according to claim 43, wherein said removable device integrates cryptographic functionalities comprising at least one management and generation of asymmetric keys, digital signature or symmetric encryption.

45. An operative module according to claim 43, wherein said removable device integrates at least one storage unit selected from the group comprising a RAM memory, a flash memory or an internal memory.

## Patentansprüche

1. Verfahren zur Verwaltung und Absicherung von Wahlverfahren in Zusammenhang mit einer elektronischen Wahlstation (101), wobei die Wahlstation mindestens eine Oberfläche zur Darstellung der auszuwählenden Wahlmöglichkeiten sowie Mittel zur Durchführung der Auswahl umfasst, mit denen ein Wähler (103) zur Durchführung eines Auswahlschritts zur Auswahl einer oder mehrerer Wahlmöglichkeiten in Wechselwirkung tritt, wobei nach diesem Schritt eine oder mehrere ausgewählte Wahlmöglichkeiten einer örtlichen oder Fernwahlauswertungsstelle zur Verfügung gestellt werden, **dadurch gekennzeichnet, dass** nach dem Auswahlschritt über ein mit der Wahlstation verbundenes Überprüfungsmodul (102) folgende Schritte durchgeführt werden:
a) Empfang von eine oder mehrere ausgewählte Wahlmöglichkeiten betreffenden Daten;
b) Bereitstellung einer Oberfläche, über die der Wähler (103) eine oder mehrere zuvor ausgewählte Möglichkeiten überprüfen kann;
c) Bereitstellung von Bestätigungsmitteln; sowie
d) bei Akzeptierung der einen oder mehreren Wahlmöglichkeiten durch den Wähler (103) Erstellung eines digitalen Registers zum Schutz der Unversehrtheit der digitalen Daten mit Hilfe der Bestätigungsmittel,
so dass durch eine einzige Prüfung des Überprüfungsmoduls (102) eine Prüfung des gesamten, mit der Wahlstation in Verbindung stehenden Wahlverfahren erzielt werden kann.

2. Verfahren nach Anspruch 1, **gekennzeichnet durch** einen zusätzlichen Sendeschritt zum Senden digitaler Informationsdaten, die zumindest das Ergebnis der Bestätigung enthalten.

3. Verfahren nach Anspruch 2, **dadurch gekennzeichnet, dass** der Sendeschritt in Richtung der Wahlstation erfolgt.

4. Verfahren nach Anspruch 2 oder 3, **dadurch gekennzeichnet, dass** die digitalen Informationsdaten digitale Informationen enthalten, die eine oder mehrere ausgewählte Wahlmöglichkeiten betreffen.

5. Verfahren nach Anspruch 1, **dadurch gekennzeichnet, dass** die digitalen Daten aus Schritt (a) zumindest eine oder mehrere der vom Wähler (103) an der Wahlstation ausgewählten Möglichkeiten enthält.

6. Verfahren nach Anspruch 1, **dadurch gekennzeichnet, dass** zur Überprüfung des fehlerfreien Auszählens der an der mit dem Überprüfungsmodul verbundenen Wahlstation ausgewählten Wahlmöglichkeit/-keiten das digitale Register befragt werden kann.

7. Verfahren nach Anspruch 1, **dadurch gekennzeichnet, dass** ein zusätzlicher Schritt durchgeführt wird, der in der Prüfung des mit der Wahlstation in Verbindung stehenden Wahlverfahrens durch Prüfung des Überprüfungsmoduls besteht.

8. Verfahren nach Anspruch 1, **dadurch gekennzeichnet, dass** Schritt b) die Bereitstellung einer Bildoberfläche umfasst.

9. Verfahren nach Anspruch 1, **dadurch gekennzeichnet, dass** Schritt b) die Bereitstellung einer Tonoberfläche umfasst.

10. Verfahren nach Anspruch 1, **dadurch gekennzeichnet, dass** Schritt b) die Bereitstellung einer Tastoberfläche umfasst.

11. Verfahren nach Anspruch 1, **dadurch gekennzeichnet, dass** Schritt b) die Bereitstellung einer Oberfläche mit mindestens zwei Optionen umfasst.

12. Verfahren nach Anspruch 11, **dadurch gekennzeichnet, dass** diese Optionen durch mindestens zwei Schaltflächen der Oberfläche dargestellt sind.

13. Verfahren nach Anspruch 11, **dadurch gekennzeichnet, dass** diese Optionen auf mindestens zwei hörbare Befehle über diese Oberfläche ansprechen.

14. Verfahren nach Anspruch 1, **dadurch gekennzeichnet, dass** Schritt d) zur Erstellung eines Registers die Anfertigung einer Kopie der empfangenen und bestätigten Daten umfasst.

15. Verfahren nach Anspruch 14, **dadurch gekennzeichnet, dass** Schritt d) zur Erstellung eines Registers weiterhin den Einsatz eines Zählers zum Auszählen der Zahl der Bestätigungen umfasst, die für jede der verschiedenen Wahlmöglichkeiten durchgeführt wurden.

16. Verfahren nach Anspruch 1, **dadurch gekennzeichnet, dass** Schritt d) zur Erstellung eines Registers den Einsatz eines Zählers zum Auszählen der Zahl der Bestätigungen umfasst, die für jede der verschiedenen Wahlmöglichkeiten durchgeführt wurden.

17. Verfahren nach Anspruch 1, **dadurch gekennzeichnet, dass** Schritt d) zur Erstellung eines Registers die Durchführung eines Kryptoschritts an zumindest einem Teil der jeweiligen von der Wahlstation empfangenen und bestätigten Daten umfasst.

18. Verfahren nach Anspruch 17, **dadurch gekennzeichnet, dass** das Ergebnis des Kryptoschritts in einer Summierung besteht, die vom genauen Inhalt jedes einzelnen Datums der empfangenen bestätigten digitalen Daten abhängt.

19. Verfahren nach Anspruch 18, **dadurch gekennzeichnet, dass** es sich bei dem Kryptoschritt um eine kumulierte Summenfunktion (OWA) handelt.

20. Verfahren nach Anspruch 18, **dadurch gekennzeichnet, dass** Schritt d) zur Erstellung eines Registers den Einsatz eines Zählers zum Auszählen der Zahl der Bestätigungen umfasst, die für jede der verschiedenen Wahlmöglichkeiten durchgeführt wurden.

21. Verfahren nach Ansprüchen 15, 16 oder 20, **dadurch gekennzeichnet, dass** das Register im Überprüfungsmodul hinterlegt wird.

22. Verfahren nach Anspruch 17, **dadurch gekennzeichnet, dass** das Überprüfmodul mit mindestens einem asymmetrischen Schlüssel versehen ist.

23. Verfahren nach Anspruch 22, **dadurch gekennzeichnet, dass** das digitale Register eine digitale Signatur aufweist, die auf Daten aus den digitalen Daten aus Schritt a) unter Verwendung der privaten Komponente des zumindest einen asymmetrischen Schlüssels beruht.

24. Verfahren nach Anspruch 22, **dadurch gekennzeichnet, dass** das digitale Register eine Verschlüsselung aufweist, die auf den digitalen Daten aus Schritt a) unter Verwendung zumindest eines öffentlichen Schlüssels einer autorisierten Stelle beruht.

25. Verfahren nach Anspruch 24, **dadurch gekennzeichnet, dass** die Verschlüsselung aus einem digitalen Umschlag besteht.

26. Verfahren nach Anspruch 24, **dadurch gekennzeichnet, dass** das digitale Register eine zugehörige digitale Signatur aufweist, die mit der privaten Komponente des zumindest einen asymmetrischen Schlüssels erstellt wurde.

27. Verfahren nach Anspruch 24, **dadurch gekennzeichnet, dass** das Verfahren einen weiteren Schritt zur Entschlüsselung der verschlüsselten digitalen Daten durch mindestens einen privaten Schlüssel einer autorisierten Stelle umfasst.

28. Verfahren nach Anspruch 24, **dadurch gekennzeichnet, dass** das Verfahren einen weiteren Schritt zur Zustellung eines Wahlempfangsscheins umfasst, die aufgrund einer Einzelidentifizierung des Wählers (103) erstellt wird.

29. Verfahren nach Anspruch 23 oder 26, **dadurch gekennzeichnet, dass** das Verfahren einen weiteren Schritt umfasst, bei dem in einen Druck des den digitalen Daten aus Schritt a) entsprechenden Inhalts eine grafische Darstellung der digitalen Signatur integriert wird.

30. Überprüfungsbetriebsmodul (102), das mit einer elektronischen Wahlstation (101) verbunden ist, wobei die Wahlstation mindestens eine Oberfläche zur Darstellung der auszuwählenden Wahlmöglichkeiten sowie Mittel zur Durchführung der Auswahl umfasst, mit denen ein Wähler (103) zur Durchführung eines Auswahlschritts zur Auswahl einer oder mehrerer Wahlmöglichkeiten in Wechselwirkung tritt, wobei anschließend eine oder mehrere ausgewählte Wahlmöglichkeiten einer örtlichen oder Fernwahlauswertungsstelle zur Verfügung gestellt werden, **dadurch gekennzeichnet, dass** es folgendes umfasst:
a) eine Eingabeeinheit, die eine Wechselwirkung mit der Wahlstation zum Empfang von Daten, die eine oder mehrere an der Wahlstation ausgewählte Wahlmöglichkeiten betrifft, ermöglicht;
b) eine Oberfläche, über die der Wähler (103) eine oder mehrere zuvor ausgewählte Wahlmöglichkeiten überprüfen kann;
c) Bestätigungsmittel; sowie
d) eine Auswertungseinheit zur Erstellung eines digitalen Registers zur Absicherung der Geheimhaltung der in Abschnitt a) empfangenen digitalen Daten, die mit Hilfe der Bestätigungsmittel c) bestätigt wurden,
so dass durch eine einzige Prüfung des Überprüfungsmoduls (102) eine Prüfung des gesamten, mit der Wahlstation in Verbindung stehende Wahlverfahren erzielt werden kann.

31. Betriebsmodul nach Anspruch 30, **dadurch gekennzeichnet, dass** es weiterhin eine Ausgabeeinheit zum Senden der aus dem Überprüfungsverfahren stammenden digitalen Daten umfasst.

32. Betriebsmodul nach Anspruch 31, **dadurch gekennzeichnet, dass** die aus dem Überprüfungsverfahren stammenden Daten an die Wahlstation gesendet werden.

33. Betriebsmodul nach Anspruch 31, **dadurch gekennzeichnet, dass** es sich bei der Eingabe- und Ausgabeeinheit um dieselbe Einheit handelt.

34. Betriebsmodul nach Anspruch 30, **dadurch gekennzeichnet, dass** es weiterhin eine Speichereinheit zum Speichern der zu der in Abschnitt d) beschriebenen Erstellung des digitalen Registers notwendigen Daten umfasst.

35. Betriebsmodul nach Anspruch 34, wobei es sich bei der Speichereinheit um eine Einzelschreibvorrichtung handelt.

36. Betriebsmodul nach Anspruch 30, **dadurch gekennzeichnet, dass** es weiterhin eine Einheit zur Zustellung eines Wahlempfangsscheins an den Wähler (103) umfasst.

37. Betriebsmodul nach Anspruch 30, bei dem es sich bei der Überprüfungsoberfläche um einen Bildschirm, ausgewählt aus der Gruppe bestehend aus mindestens einem LCD-Bildschirm oder TFT-Bildschirm, handelt.

38. Betriebsmodul nach Anspruch 30, bei dem es sich bei der Überprüfungsoberfläche um ein Tongerät, ausgewählt aus der Gruppe mindestens bestehend aus Kopfhörern oder Lautsprechern, handelt.

39. Betriebsmodul nach Anspruch 30, bei dem es sich bei der Überprüfungsoberfläche um einen Drucker handelt.

40. Betriebsmodul nach Anspruch 30, bei dem es sich bei der Überprüfungsoberfläche um ein Tastgerät, ausgewählt aus der Gruppe bestehend aus mindestens einem Zeichenerkennungsgerät oder einer Braille-Anzeige, handelt.

41. Betriebsmodul nach Anspruch 30, bei dem es sich bei den Bestätigungsmitteln um ein Tastgerät, ausgewählt aus der Gruppe bestehend aus mindestens einem Taster oder Bildschirm, handelt.

42. Betriebsmodul nach Anspruch 30, bei dem es sich bei den Bestätigungsmitteln um ein Tongerät, ausgewählt aus der Gruppe bestehend aus mindestens einem Tonwiedergabegerät, Tonerfassungsgerät oder Mikrofon, handelt.

43. Betriebsmodul nach Anspruch 30, bei dem es sich bei der Auswertungseinheit um ein abnehmbares Gerät mit Rechenfähigkeit, ausgewählt aus der Gruppe bestehend aus mindestens einer Smart-Karte oder einem FPGA, handelt.

44. Betriebsmodul nach Anspruch 43, bei dem im abnehmbaren Gerät Kryptofunktionalitäten mit mindestens einer Verwaltung und Erstellung asymmetrischer Schlüssel, digitaler Signaturen oder symmetrischer Verschlüsselung integriert sind.

45. Betriebsmodul nach Anspruch 43, bei dem im abnehmbaren Gerät zumindest eine Speichereinheit, ausgewählt aus der Gruppe bestehend aus Arbeitsspeicher, Flashspeicher oder interner Speicher integriert sind.

## Revendications

1. Une méthode pour la gestion et protection des processus électoraux concernant un borne électronique de vote (101) et cette borne de vote comportant au moins une interface pour afficher les options de vote à sélectionner et un moyen pour mettre en oeuvre cette sélection avec quoi un électeur (103) interagit pour effectuer une phase de sélection pour choisir une ou plusieurs options de vote, ensuite une ou plusieurs options sélectionnées sont fournies à un site de dépouillement local ou distant **caractérisé en ce qu'**après cette phase de sélection, il comporte les suivantes phases à effectuer au moyen d'un module de vérification (102) relié à cette borne de vote:
a) recevoir des données numériques concernant ces une ou plusieurs options de vote;
b) fournir une interface de sorte que l'électeur (103) puisse vérifier ces une ou plusieurs options de vote préalablement sélectionnées;
c) fournir un moyen de confirmation; et
d) dans le cas où ces une ou plusieurs options de vote aient été acceptées par cet électeur (103), générer un enregistrement numérique pour protéger l'intégrité de ces données numériques de ce moyen de conformation de sorte qu'à travers un seul contrôle de ce module de vérification (102) un contrôle de tout le processus électoral relié à cette borne de vote puisse être obtenu.

2. Une méthode, conformément à la revendication 1, **caractérisée par** une phase complémentaire pour envoyer des données numériques informatives contenant au moins le résultat de cette confirmation.

3. Une méthode conformément à la revendication 2, **caractérisée en ce que** cette phase d'envoi est effectuée vers cette borne de vote.

4. Une méthode conformément à la revendication 2 ou 3, **caractérisée en ce que** ces données informatives contiennent des informations numériques concernant ces une ou plusieurs options de vote sélectionnées.

5. Une méthode conformément à la revendication 1, **caractérisée en ce que** ces données numériques de la phase a) comportent au moins ces une ou plusieurs options sélectionnées par l'électeur (103) à la borne de vote.

6. Une méthode conformément à la revendication 1, **caractérisée en ce que** cet enregistrement numérique peut être interrogé pour vérifier l'intégrité du dépouillement des options de vote sélectionnées à la borne de vote reliée à ce module de vérification.

7. Une méthode conformément à la revendication 1, **caractérisée en ce qu'**une phase complémentaire est effectuée consistant en un contrôle du processus électoral reliée à cette borne de vote à travers un contrôle de ce module de vérification.

8. Une méthode conformément à la revendication 1, **caractérisée en ce que** cette phase b) comporte l'offre d'une interface visuelle.

9. Une méthode conformément à la revendication 1, **caractérisée en ce que** cette phase b) comporte l'offre d'une interface acoustique.

10. Une méthode conformément à la revendication 1, **caractérisée en ce que** cette phase b) comporte l'offre d'une interface de clavier.

11. Une méthode conformément à la revendication 1, **caractérisée en ce que** cette phase b) comporte l'offre d'une interface ayant au moins deux options.

12. Une méthode conformément à la revendication 11, **caractérisée en ce que** ces options sont représentées par au moins deux boutons de cette interface.

13. Une méthode conformément à la revendication 11, **caractérisée en ce que** ces options répondent à un minimum de deux commandes audibles à travers cette interface.

14. Une méthode conformément à la revendication 1, **caractérisée en ce que** cette phase d) pour générer un enregistrement comporte la génération d'une copie de ces données numériques reçues et confirmées.

15. Une méthode conformément à la revendication 14, **caractérisée en ce que** cette phase d) pour générer un enregistrement comporte de plus l'utilisation d'un compteur pour compter le nombre de confirmations effectuées pour chacune des options de vote différentes possibles.

16. Une méthode conformément à la revendication 1, **caractérisée en ce que** cette phase d) pour générer un enregistrement comporte l'utilisation d'un compteur pour compter le nombre de confirmations effectuées pour chacune des options de vote différentes possibles.

17. Une méthode conformément à la revendication 1, **caractérisée en ce que** cette phase d) pour générer un enregistrement comporte une opération cryptographique sur au moins une partie de chacune de ces données numériques reçues de la borne de vote et confirmées.

18. Une méthode conformément à la revendication 17, **caractérisée en ce que** le résultat de cette opération cryptographique consiste en un résumé dépendant du contenu précis de toutes et chacune des données numériques reçues ayant été confirmées.

19. Une méthode conformément à la revendication 18 **caractérisée en ce que** cette opération cryptographique est une fonction de résumé par accumulation (OWA).

20. Une méthode conformément à la revendication 18, **caractérisée en ce que** cette phase d) pour générer un enregistrement comporte l'utilisation d'un compteur pour compter le nombre de confirmations effectuées pour chacune des options de vote différentes possibles.

21. Une méthode conformément aux revendications 15, 16 ou 20, **caractérisée en ce que** cet enregistrement est stocké dans ce module de vérification.

22. Une méthode conformément à la revendication 17, **caractérisée en ce qu'**elle offre au module de vérification au moins une touche asymétrique.

23. Une méthode conformément à la revendication 22 **caractérisée en ce que** cet enregistrement numérique comporte une empreinte numérique basée sur des données provenant des données numériques de la phase a), en utilisant le composant privé de ces touches asymétriques qui sont au moins une.

24. Une méthode conformément à la revendication 22, **caractérisée en ce que** cet enregistrement numérique comporte un chiffrage basé sur les données numériques de la phase a), en utilisant au moins une touche publique d'une autorité.

25. Une méthode conformément à la revendication 24, **caractérisée en ce que** ce chiffrage consiste en une enveloppe numérique.

26. Une méthode conformément à la revendication 24, **caractérisée en ce que** cet enregistrement numérique a une empreinte numérique associée générée avec le composant privé de ces touches asymétriques qui sont au moins une.

27. Une méthode conformément à la revendication 24, **caractérisée en ce qu'**elle comporte une phase complémentaire pour déchiffrer ces données numériques chiffrées par au moins une touche privée d'une autorité.

28. Une méthode conformément à la revendication 24, **caractérisée en ce qu'**elle comporte une phase complémentaire pour délivrer un reçu de vote généré sur la base d'un seul identificateur de l'électeur (103).

29. Une méthode conformément à la revendication 23 ou 26, **caractérisée en ce qu'**elle comporte une phase complémentaire incorporant un affichage de cette empreinte numérique pour imprimer le contenu représentant ces données numériques de la phase a).

30. Un module opératoire de vérification (102) associé à une borne de vote électronique (101), cette borne de vote comportant au moins une interface pour présenter les options de vote à sélectionner et des moyens pour effectuer cette sélection, avec lesquels l'électeur (103) interagit pour effectuer une phase de sélection pour choisir une ou plusieurs options de vote, ensuite une ou plusieurs options sélectionnées sont fournies à un site de dépouillement local ou distant, **caractérisé en ce qu'**il comporte:
a) une unité d'entrée permettant l'interaction avec cette borne de vote pour recevoir des données numériques correspondant aux option/options de vote sélectionnées de cette borne de vote;
b) une interface pour que l'électeur (103) vérifie ces options de vote préalablement sélectionnées;
c) un moyen de confirmation, et
d) une unité de traitement pour générer un enregistrement numérique pour protéger l'intégrité de toutes les données numériques reçues dans la section a) et qui ont été confirmées par les moyens c)
de sorte qu'à travers un seul contrôle de ce module de vérification (102), un contrôle de tout le processus électoral relié à cette borne de vote puisse être obtenu.

31. Un module opératoire conformément à la revendication 30, **caractérisé en ce qu'**il comporte de plus une unité de sortie pour envoyer des données numériques provenant du processus de vérification.

32. Un module opératoire conformément à la revendication 31, **caractérisée en ce que** ces données numériques provenant du processus de vérification sont envoyées à cette borne de vote.

33. Un module opératoire conformément à la revendication 31, **caractérisé en ce que** cette unité d'entrée et cette unité de sortie sont une même unité.

34. Un module opératoire conformément à la revendication 30, **caractérisée en ce qu'**il comporte de plus une unité de stockage pour stocker des données nécessaires à la génération de cet enregistrement numérique décrit dans la section d).

35. Un module opératoire conformément à la revendication 34, dans lequel cette unité de stockage est un dispositif pour une seule écriture.

36. Un module opératoire conformément à la revendication 30, **caractérisé en ce qu'**il comporte de plus une unité pour délivrer un reçu de vote à l'électeur (103).

37. Un module opératoire conformément à la revendication 30, dans lequel cette interface de vérification est un écran d'affichage sélectionné d'un groupe comportant au moins un écran LCD ou un écran TFT.

38. Un module d'opération conformément à la revendication 30, dans lequel cette interface de vérification est un dispositif acoustique sélectionné du groupe comportant au moins des casques d'écoute ou des haut-parleurs.

39. Un module opératoire conformément à la revendication 30, dans lequel cette interface de vérification est une imprimante.

40. Un module opératoire conformément à la revendication 30, dans lequel cette interface de vérification est un dispositif à clavier sélectionné du groupe comportant au moins un dispositif de reconnaissance de caractère ou un affichage Braille.

41. Un module opératoire conformément à la revendication 30, dans lequel ces moyens de confirmation sont un dispositif à clavier sélectionné du groupe comportant au moins un bouton ou un écran.

42. Un module opératoire conformément à la revendication 30, dans lequel ce moyen de confirmation est un dispositif acoustique sélectionné du groupe comportant au moins un répétiteur, un détecteur de son ou un microphone.

43. - Un module opératoire conformément à la revendication 30, dans lequel cette unité de traitement est un dispositif amovible ayant la capacité de calculer, sélectionné du groupe comportant au moins une carte intelligente ou une FPGA.

44. Un module opératoire conformément à la revendication 43, dans lequel ce dispositif amovible intègre des fonctions de chiffrage comportant au moins une gestion et génération de touches asymétriques, empreinte numérique ou chiffrage symétrique.

45. Un module opératoire conformément à la revendication 43, dans lequel ce dispositif amovible intègre au moins une unité de stockage sélectionné du groupe comportant une mémoire RAM, une mémoire rapide ou une mémoire interne.
